(19) Europäisches Patentamt
European Patent Office
Office européen des brevets

(11) EP 4 778 739 A1

(12) EUROPEAN PATENT APPLICATION

(43) Date of publication:
22.07.2026 Bulletin 2026/30

(21) Application number: 25225569.0

(22) Date of filing: 19.12.2025

(51) International Patent Classification (IPC):
B60C 1/00 (2006.01)    B60C 11/03 (2006.01)
B60C 11/04 (2006.01)    B60C 11/12 (2006.01)
B60C 11/13 (2006.01)

(52) Cooperative Patent Classification (CPC):
B60C 11/042; B60C 1/00; B60C 11/032;
B60C 11/1281; B60C 11/1392; B60C 11/0323;
B60C 2011/0348; B60C 2011/0362; B60C 2200/04;
B60C 2200/06

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 17.01.2025 JP 2025006878

(71) Applicant: Sumitomo Rubber Industries, Ltd.
Kobe-shi, Hyogo 651-0072 (JP)

(72) Inventors:
• FUNAHASHI, Miki
Kobe-shi, 651-0072 (JP)
• MORI, Kazuma
Kobe-shi, 651-0072 (JP)
• ITO, Shuhei
Kobe-shi, 651-0072 (JP)

(74) Representative: Manitz Finsterwald
Patent- und Rechtsanwaltspartnerschaft mbB
Martin-Greif-Straße 1
80336 München (DE)

(54) TIRE

(57) Provided is a tire 1 that can improve wet performance and heat dissipation property from an early stage of wear to a late stage of wear while maintaining rolling resistance performance and wear resistance performance.

The tire 1 includes a tread 10 having a tread surface TRS. The tread 10 has a plurality of circumferential grooves 300. The plurality of circumferential grooves 300 divide the tread 10 into a plurality of land portions 200, and have a pair of circumferential main grooves 330 and at least one circumferential narrow groove 320. The circumferential narrow groove 320 has a narrow width portion 321 and an enlarged width portion 322. A groove width NIW of the narrow width portion 321 has a width at which, when the tire 1 comes into contact with the road surface, side walls (321a, 321b) of the narrow width portion 321 come into contact with each other. At least one of the land portions 200, which is adjacent to the circumferential narrow groove 320, has a plurality of pinholes 100. A depth PHD of the pinhole 100 is shallower than a depth CMD of the circumferential main groove 330. The pinhole 100 has a shape tapering toward the inner side in the tire radial direction. The relationship between a width L1 of the land portion 200 having the pinhole 100 and a distance L2 from the circumferential narrow groove 320 to the pinhole 100 satisfies the following Formula (1):

$$0.3 \leq L2/L1 \leq 0.7 \qquad \text{Formula (1).}$$

FIG. 1

EP 4 778 739 A1

**Description**

**TECHNICAL FIELD**

The present invention relates to a tire.

**BACKGROUND ART**

Patent Literature 1 discloses a tire including a tread having a circumferential narrow groove provided with an enlarged width portion on the inner side in tire radial direction. In the tire disclosed in Patent Literature 1, when the tire comes into contact with the ground, land portions adjacent to each other via the circumferential narrow groove support each other in an early stage of wear, so that tread stiffness is improved, and rolling resistance performance and wear resistance performance are improved. In addition, in the tire disclosed in Patent Literature 1, the groove width of the circumferential narrow groove is enlarged in a late stage of wear, so that a decrease in the groove volume is suppressed, and wet performance is maintained.
When a tread surface, where the tire comes into contact with the road surface, becomes wider, the tread easily causes heat due to friction with the road surface. The heat caused in the tread leads to a decrease in the rolling resistance performance and durability. In order to suppress the heat caused in the tread, it is known to provide a pinhole in the tread to improve heat dissipation property of the tread.
Patent Literature 2 discloses a tire including a tread, the tire including a creeping longitudinal groove, a creeping lateral groove, a sipe extending between the creeping longitudinal grooves, a sipe extending between the creeping lateral grooves, and a sipe crossing groove where the sipe extending between the creeping longitudinal grooves and the sipe extending between the creeping lateral grooves cross. That is, the tire disclosed in Patent Literature 2 has a configuration in which the sipe crossing groove, corresponding to the above-described pinhole, is provided in the sipes.

**CITATION LIST**

[PATENT LITERATURE]

  Patent Literature 1: Japanese Laid-Open Patent Publication No. 2024-118533
  Patent Literature 2: Japanese Translation of PCT International Application Publication No. 2012-501914

**SUMMARY OF THE INVENTION**

[TECHNICAL PROBLEM]

The present inventor has found a problem that, in the tire disclosed in Patent Literature 1, the wet performance and the heat dissipation property of the tread may decrease in the early stage of wear. Also, the present inventor has found a problem that, in the tire disclosed in Patent Literature 2, the pinhole provided in the sipes may decrease the tread stiffness, and the rolling resistance performance and the wear resistance performance may not be maintained.
The present invention has been made in view of such circumstances, and an object thereof is to provide a tire that can improve wet performance and heat dissipation property from an early stage of wear to a late stage of wear while maintaining rolling resistance performance and wear resistance performance.

[SOLUTION TO PROBLEM]

A tire according to one aspect of the present invention includes a tread having a tread surface that comes into contact with a road surface, in which: the tread has a plurality of circumferential grooves continuously extending in a tire circumferential direction; the plurality of circumferential grooves divide the tread into a plurality of land portions aligned in a tire width direction; the plurality of circumferential grooves has a pair of circumferential main grooves, and at least one circumferential narrow groove located on an inner side in the tire width direction relative to the pair of circumferential main grooves; the circumferential narrow groove includes a narrow width portion located on an outer side in a tire radial direction, and an enlarged width portion located on an inner side in the tire radial direction and having a groove width wider than the narrow width portion; a groove width of the narrow width portion has a width at which, when the tire comes into contact with the road surface, side walls of the narrow width portion come into contact with each other; at least one of the land portions, which is adjacent to the circumferential narrow groove, has a plurality of pinholes aligned in the tire circumferential direction; a depth of the pinhole is shallower than a depth of the circumferential main groove; the pinhole has a shape tapering toward the inner side in the tire radial direction; and a relationship between a width L1 of the land portion having the pinhole and a distance L2 from the circumferential narrow groove to the pinhole satisfies the following Formula (1):

$$0.3 \leq L2/L1 \leq 0.7 \qquad \text{Formula (1).}$$

[ADVANTAGEOUS EFFECTS OF THE INVENTION]

According to the present invention, it is possible to obtain a tire that can improve wet performance and heat dissipation property from an early stage of wear to a late stage of wear while maintaining rolling resistance performance and wear resistance performance.

**BRIEF DESCRIPTION OF DRAWINGS**

FIG. 1 is a schematic view of a tread pattern of a tire according to an embodiment of the present invention.
FIG. 2 is a schematic view of a cross section taken along line X-X in FIG. 1.
FIG. 3 is a schematic view for explaining a configuration of a pinhole.
FIG. 4 is a schematic view for explaining a configuration of a circumferential narrow groove.
FIG. 5 is a schematic view of a tread pattern of a tire according to a modification.

**DETAILED DESCRIPTION**

Hereinafter, the present invention will be described in detail based on preferred embodiments with reference to the drawings as appropriate.

[Basic Matters of Tire of Present Invention]

In the present invention, a state, where a tire is mounted on a standard rim, an internal pressure of the tire is adjusted to a standard pressure, and no load is applied to the tire, is referred to as a standard state. Unless otherwise specified, description will be made based on a tire in a state where no wear due to driving has occurred.

In the present invention, the dimensions and angles of each portion of the tire are measured in the standard state, unless otherwise specified. The dimensions and angles of each portion in the meridian cross section of the tire, which cannot be measured in a state where the tire is mounted on the standard rim, are measured in a cut surface of the tire obtained by cutting the tire along a plane including the rotational axis. In this measurement, the tire is set such that the distance between the left and right beads matches the distance between the beads in the tire mounted on the standard rim. Note that the configurations of the tire that cannot be confirmed in a state where the tire is mounted on the standard rim are confirmed in the above-described cut surface.

The standard rim means rims defined in the standards on which the tire is based. The standard rims include the "Standard Rim" in the JATMA standard, the "Design Rim" in the TRA standard, and the "Measuring Rim" in the ETRTO standard.

The standard pressure means internal pressures defined in the standards on which the tire is based. The standard pressures include the "MAXIMUM INFLATION PRESSURE" in the JATMA standard, the "MAXIMUM VALUE" listed in the "TIRE LOAD LIMITS AT VARIOUS COLD INFLATION PRESSURES" in the TRA standard, and the "INFLATION PRESSURE" in the ETRTO standard.

A standard load means loads defined in the standards on which the tire is based. The standard loads include the "MAXIMUM LOAD CAPACITY" in the JATMA standard, the "MAXIMUM VALUE" listed in the "TIRE LOAD LIMITS AT VARIOUS COLD INFLATION PRESSURES" in the TRA standard, and the "LOAD CAPACITY" in the ETRTO standard.

In the present invention, the tire includes a tread, a pair of beads, and a pair of sidewalls as sections. The tread includes a tread surface that comes into contact with the road surface. The central portion of the tread is also called a crown portion. The end portion of the tread is also called a shoulder portion. The tread is a section of the tire formed of tread rubber containing crosslinked rubber. The bead is a section of the tire that is fitted to the rim. The sidewall is a section of the tire that extends between the tread portion and the bead portion.

[Knowledge Underlying Present Invention]

The present inventor has obtained the following knowledge by analyzing the wet performance and the heat dissipation property of a tire including a circumferential narrow groove having an enlarged width portion on an inner side in a tire radial direction.

While driving, the tread repeatedly comes into and out of contact with the ground. The circumferential narrow groove of the tread that is in contact with the ground is in a state where the side walls are narrowed (hereinafter, it may be simply referred to as a "closed state"). The circumferential narrow groove of the tread that is out of contact with the ground is in a state where the side walls are widened (hereinafter, it may be simply referred to as an "open state").

In the tire including the circumferential narrow groove having the enlarged width portion on the inner side in the tire radial direction, the groove width of the circumferential narrow groove increases in the late stage of wear, so that a decrease in the groove volume is suppressed and the wet performance is maintained, as described above. On the other hand, the side walls of the circumferential narrow groove are in the closed state in the early stage of wear, and there is a risk that sufficient wet performance cannot be secured.

In the tire including the circumferential narrow groove having the enlarged width portion on the inner side in the tire radial direction, the tread surface of the land portion adjacent to the circumferential narrow groove is widened in the early stage of wear. Therefore, the tread of the land portion adjacent to the circumferential narrow groove easily causes heat in the early stage of wear, and there is a risk that rolling resistance performance and durability may decrease.

In a tire including a circumferential narrow groove having an enlarged width portion on an inner side in a tire radial direction, if a pinhole is provided in a land portion adjacent to the circumferential narrow groove in order to improve the heat dissipation property of a tread of the land portion, there is a risk that wear resistance performance may deteriorate.

[Basic Configuration of Tread]

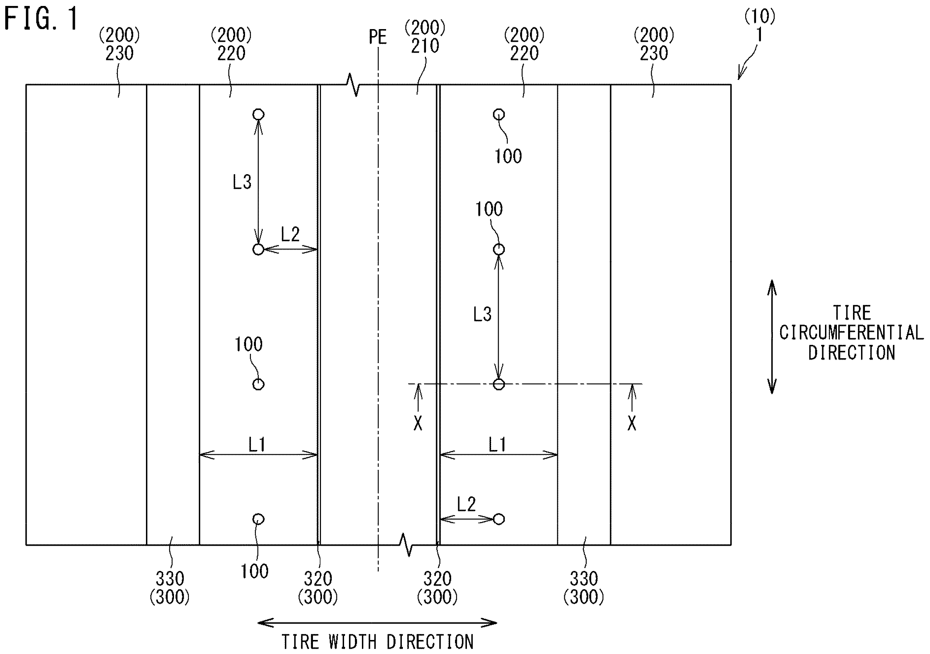

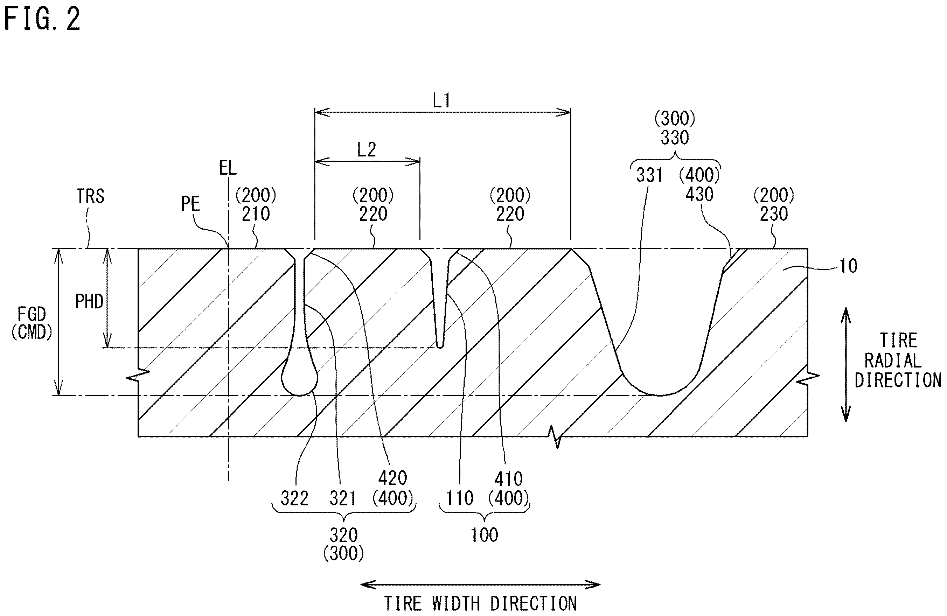

FIG. 1 is a schematic view of a tread pattern of a tire 1 according to an embodiment of the present invention. FIG. 2 is a schematic view of a cross section taken along line X-X in FIG. 1. The tire 1 is a heavy-duty tire mounted on vehicles such as trucks or buses.

PE in FIG. 1 and FIG. 2 indicates the equator of the tire 1. EL in FIG. 2 indicates the equatorial plane of the tire 1. The equator PE is an intersection of a tread surface TRS of a tread 10 and the equatorial plane EL. The tread surface TRS indicates the surface of the tread 10 when it is assumed that there is no groove in the tread 10. In FIG. 1, the tire circumferential direction and the tire width direction are each indicated by double-headed arrows. In FIG. 2, the tire radial direction and the tire width direction are each indicated by double-headed arrows. The tire width direction is parallel to the rotational axis of the tire 1. In the tire width direction, the one-dot chain line EL side is the inner side in the tire width direction, and the opposite side is the outer side in the tire width direction. In the tire radial direction, the rotational axis side is the inner side in the tire radial direction, and the tread 10 side is the outer side in the tire radial direction.

The tread 10 comes into contact with the road surface on the tread surface TRS. A circumferential groove 300 continuously extending in the tire circumferential direction is engraved in the tread 10, whereby a tread pattern is formed. In the tire 1, four circumferential grooves 300 are engraved in the tread 10. The tire 1 has five land portions 200 defined by the four circumferential grooves 300. The tread 10 has a pair of circumferential narrow grooves 320 and a pair of shoulder circumferential main grooves 330 (hereinafter, they may be simply referred to as the "circumferential main grooves 330") as the circumferential grooves 300. The tread 10 has one first land portion 210, a pair of second land portions 220, and a pair of shoulder land portions 230 as the land portions 200.

The pair of circumferential main grooves 330 is engraved on the outermost side in the tire width direction of the tread 10. The pair of circumferential narrow grooves 320 is engraved on the inner side in the tire width direction relative to the pair of circumferential main grooves 330. The first land portion 210 is located in a region defined by the pair of circumferential narrow grooves 320. The pair of second land portions 220 is located in regions defined by the pair of circumferential narrow grooves 320 and the pair of circumferential main grooves 330. The pair of shoulder land portions 230 is located on the outermost side in the tire width direction defined by the circumferential main grooves 330.

When a tire comes into contact with the road surface, a contact pressure on the tread surface is generally higher on the inner side in the tire width direction than on the outer side in the tire width direction. Therefore, uneven wear may occur in which the tread on the inner side in the tire width direction wears more than the tread on the outer side in the tire width direction while driving. In the tire 1, the circumferential narrow grooves 320 are engraved on the inner side in the tire width direction. As a result, in the tire 1, the contact pressure is dispersed in each land portion 200 in the tread 10, and the uneven wear is suppressed.

The first land portion 210 and the second land portions 220 are each a land portion 200 adjacent to the circumferential narrow groove 320. In the tread 10, the pair of second land portions 220 is provided with a plurality of pinholes 100 that are aligned in the tire circumferential direction. The pinholes 100 increase the surface area of the tread 10 exposed to air. In addition, convection of air to the insides of the pinholes 100 occurs while driving. Therefore, the heat dissipation property of the tread 10 is improved in the tire 1. The pinholes 100 also function as drain paths for rainwater. Therefore, the wet performance of the tire 1 is improved.

The pinhole 100 has a tapered hole portion 110 and a first tapered portion 410. The tapered hole portion 110 has a conical tapered hole shape in which the diameter of the hole gradually decreases toward the inner side in the tire radial direction. The circumferential narrow groove 320 has a narrow groove portion 321, an enlarged width portion 322, and a second tapered portion 420. The circumferential main groove 330 has a tapered groove portion 331 and a third tapered portion 430. Each of the pinhole 100 and the circumferential groove 300 has a tapered portion 400 opened to the tread surface TRS. Therefore, the wet performance of the tire 1 in the initial stage of wear is improved. In addition, if foreign matter, such as a stone, enters the pinhole 100 or the circumferential narrow groove 320 in the initial stage of wear, the foreign matter easily comes out of the pinhole 100 or the circumferential narrow groove 320. Therefore, occurrence of abnormal noise while driving or occurrence of drilling in which the inside of the tread 10 is damaged, due to the foreign matter trapped in the pinhole 100 or the circumferential narrow groove 320, is suppressed.

The tread 10 of the tire 1 wears due to driving. As the wear progresses, an opening PHO of the pinhole 100, which will be described later, appears on the tread surface TRS of the tire 1. As the wear further progresses, a connection position 323 of the circumferential narrow groove 320, which will be described later, appears on the tread surface TRS of the tire 1. The period when the connection position 323 starts to appear because of the wear of the tread 10 due to driving is referred to as "late stage of wear". The period before the late stage of wear is referred to as "early stage of wear". The period in the early stage of wear, before the appearance of the opening PHO, is referred to as "initial stage of wear".

[Pinhole Arrangement Positions and Operation and Effect]

L1 illustrated in FIG. 1 and FIG. 2 indicates the width of the second land portion 220 having the pinholes 100. L2 illustrated in FIG. 1 and FIG. 2 indicates the distance from the circumferential narrow groove 320 to the pinhole 100. As illustrated in FIG. 2, the width L1 indicates the shortest distance in the tire width direction from the opening of the circumferential narrow groove 320 to the opening of the circumferential main groove 330. The distance L2 indicates the shortest distance in the tire width direction from the opening of the circumferential narrow groove 320 to the opening of the pinhole 100. L3 illustrated in FIG. 1 indicates the distance in the tire circumferential direction between two pinholes 100 adjacent to each other in the tire circumferential direction of the same second land portion 220. The distance L3 indicates the shortest distance in the tire circumferential direction from the opening of one pinhole 100 to the opening of the other pinhole 100.

The pair of second land portions 220 in the tread 10 each has the same width L1. The pinholes 100, provided in each of the pair of second land portions 220, each have the same distance L2 and distance L3. The pinholes 100 provided in each of the pair of second land portions 220 are provided at positions aligned in a straight line in the tire width direction. The pinholes 100 provided in the same second land portion 220 are provided at positions aligned in a straight line in the tire circumferential direction. The first land portion 210 in the tread 10 has no pinhole 100. In the tire of the present invention, however, the pinhole 100 may be provided in the first land portion 210. In this case, the distances L2 in the pinhole 100 of the first land portion 210 include two distances of the distance from one circumferential narrow groove 320 to the pinhole 100 and the distance from the other circumferential narrow groove 320 to the pinhole 100. Therefore, the pinhole 100 of the first land portion 210 is arranged at a position where both of the two distances L2 each satisfy Formula (1) that will be described later.

The relationship between the width L1 and the distance L2 satisfies the following Formula (1):

$$0.3 \leq L2/L1 \leq 0.7 \qquad \text{Formula (1)}.$$

By providing the pinhole 100 in the vicinity of the circumferential narrow groove 320 in which L2/L1 is less than 0.3, or on the circumferential narrow groove 320 with reference to Patent Literature 2, the wet performance and the heat dissipation property of the tire 1 can be improved. If the pinhole 100 is arranged at a position where L2/L1 is less than 0.3, however, the stiffness of the peripheral tread forming the pinhole 100 and the circumferential narrow groove 320 existing in its vicinity decreases. Therefore, the pinhole 100 and the circumferential narrow groove 320 existing in its vicinity are easily deformed while driving. Similarly, if the pinhole 100 is arranged at a position where L2/L1 is more than 0.7, the wet performance and the heat dissipation property can be improved. However, the stiffness of the peripheral tread forming the pinhole 100 and the circumferential main groove 330 existing in its vicinity decreases. Therefore, the pinhole 100 and the circumferential main groove 330 existing in its vicinity are easily deformed while driving. Therefore, if L2/L1 is less than 0.3 or more than 0.7, chipping or uneven wear is likely to occur starting around the periphery of the pinhole 100. As a result, the rolling resistance performance and the wear resistance performance of the tire 1 may decrease. When L2/L1 is 0.3 or more and 0.7 or less, the stiffness of the second land portion 220 is secured. As a result, the rolling resistance performance and the wear resistance performance of the tire 1 are maintained, and chipping or uneven wear of the edge portion of the second land portion 220 existing at the boundary with the circumferential groove 300 is suppressed. L2/L1 is preferably 0.4 or more and 0.6 or less, and particularly preferably 0.45 or more and 0.55 or less. As a result, the stiffness of the second land portion 220 is further secured.

The relationship between the width L1 and the distance L3 satisfies the following Formula (2):

$$L1 < L3 \qquad \text{Formula (2).}$$

When L1 < L3, the stiffness of the second land portion 220 is improved. As a result, the rolling resistance performance and the wear resistance performance of the tire 1 are improved.

The relationship between the distance L3 and a tire circumferential length L4 satisfies the following Formula (3):

$$0.003 \leq L3/L4 \leq 0.03 \qquad \text{Formula (3).}$$

The tire circumferential length L4 is the entire length of the equator of the tire 1. When L3/L4 is 0.003 or more, and preferably 0.005 or more, a sufficient number of the pinholes 100 for heat dissipation are provided in the second land portion 220. When L3/L4 is 0.03 or less, and preferably 0.015 or less, the stiffness of the second land portion 220 is secured, and the rolling resistance performance and the wear resistance performance of the tire 1 can be maintained.

[Configuration and Operation and Effect of Pinhole]

PHD illustrated in FIG. 2 indicates the depth of the pinhole 100 in the tire radial direction from the tread surface TRS to a bottom portion 112 of the pinhole that will be described later. FGD indicates the depth of the circumferential narrow groove 320 in the tire radial direction from the tread surface TRS to a bottom portion 325 of the enlarged width portion that will be described later. CMD indicates the depth of the circumferential main groove 330 in the tire radial direction from the tread surface TRS to the bottom of the tapered groove portion 331.

As illustrated in FIG. 2, the depth PHD of the pinhole 100 is shallower than the depth CMD of the circumferential main groove 330. As a result, in the tire 1, formation defects, such as chipping of the land portion and bending of the pinhole, are suppressed in the manufacturing process, particularly at the time of mold release. The depth FGD of the circumferential narrow groove 320 is set to be equal to or less than the depth CMD. Furthermore, the depth PHD is set to be shallower than the depth FGD. As illustrated in FIG. 2, the depth FGD and the depth CMD are set to be equal to each other in the tire 1. That is, the relationship between the depth PHD, the depth FGD, and the depth CMD satisfies the following Formula (4):

$$\text{Depth PHD} < \text{Depth FGD} \leq \text{Depth CMD} \qquad \text{Formula (4).}$$

As a result, the wet performance of the tire 1 is secured in a well-balanced manner from the early stage of wear to the late stage of wear. The depth CMD is, for example, 10 mm or more and 21 mm or less. The depth FGD is, for example, 10 mm or more and 21 mm or less. The depth PHD is, for example, 4 mm or more and 19 mm or less.

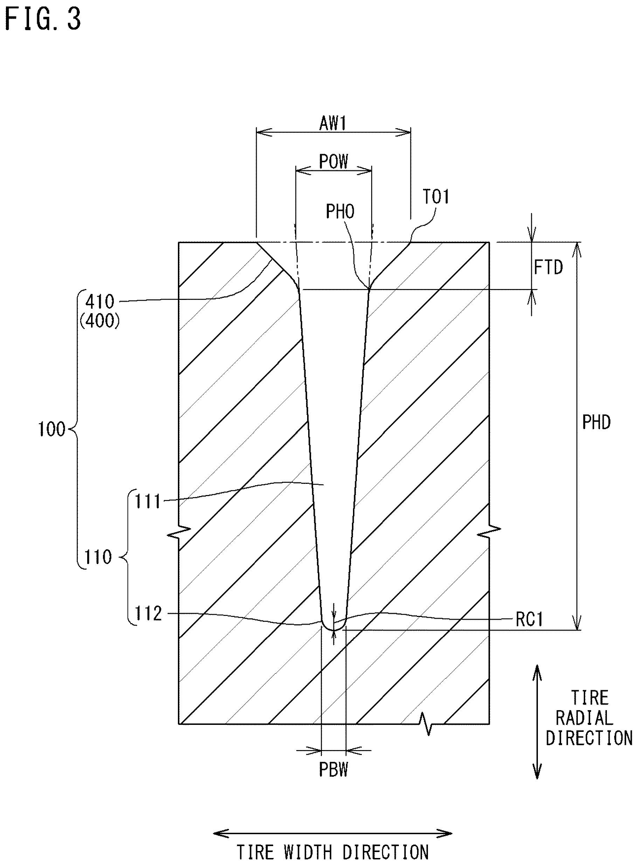

FIG. 3 is a schematic view for explaining a configuration of the pinhole 100. As described above, the pinhole 100 has the tapered hole portion 110 and the first tapered portion 410. The tapered hole portion 110 has an inclined portion 111 forming a conical inclination, and the bottom portion 112 including an R surface with a first radius of curvature RC1. The first radius of curvature RC1 is preferably 0.5 mm or more and 1.0 mm or less. When the first radius of curvature RC1 is 0.5 mm or more, distortion of the bottom portion 112 during the driving of the tire 1 is reduced, and crack resistance performance is improved. When the first radius of curvature RC1 is 1.0 mm or less, the stiffness of the tread 10 is secured, and the rolling resistance performance and the wear resistance performance are improved.

AW1 illustrated in FIG. 3 is an opening width of the first tapered portion 410 (hereinafter, it may be referred to as a "first opening width AW1"). POW is the opening width of the tapered hole portion 110 on the virtual tread surface TRS when the pinhole 100 does not have the first tapered portion 410. PBW is the opening width of the bottom portion 112 of the tapered hole portion 110. FTD indicates the depth in the tire radial direction of the first tapered portion 410.

The pinhole 100 has the tapered hole portion 110 and the first tapered portion 410 that taper toward the inner side in the tire radial direction, so that, when foreign matter such as a stone enters, the foreign matter easily comes off, as described above. Therefore, occurrence of abnormal noise while driving or occurrence of drilling in which the inside of the tread 10 is damaged is suppressed. As illustrated in FIG. 3, the angle of the first tapered portion 410 is more obtuse than the angle of the inclined portion 111 of the tapered hole portion 110 with respect to the tread surface TRS. Therefore, in the pinhole 100, chipping or uneven wear of the edge portion in the initial stage of wear is suppressed. Furthermore, the wet performance in the initial stage of wear is improved by the first tapered portion 410.

An opening width PBW of the bottom portion 112 is 1.0 mm or more and 2.0 mm or less. When the opening width PBW is 1.0 mm or more, heat dissipation property is sufficiently secured. When the opening width PBW is 2.0 mm or less, intrusion of foreign matter such as a stone, which has entered the tapered hole portion 110, into the tread 10 is reduced. As a result, occurrence of the drilling is suppressed. The opening width POW of the tapered hole portion 110 is 2.0 mm or more and 4.0 mm or less. When the opening width POW is 2.0 mm or more, heat dissipation property is sufficiently secured. When the opening width POW is 4.0 mm or less, the stiffness of the second land portion 220 is secured, and the rolling resistance performance and the wear resistance performance of the tire 1 can be maintained. The first opening width AW1 is wider than the opening width POW, and can be set to be, for example, 2.5 mm or more and 6.0 mm or less.

In the initial stage of wear, the tread 10 wears to the depth FTD due to driving. The depth FTD is set to be 10 to 20% of the depth PHD. As a result, the drainage property in the early stage of wear is secured, and the wet performance is improved.

[Configuration and Operation and Effect of Circumferential Narrow Groove]

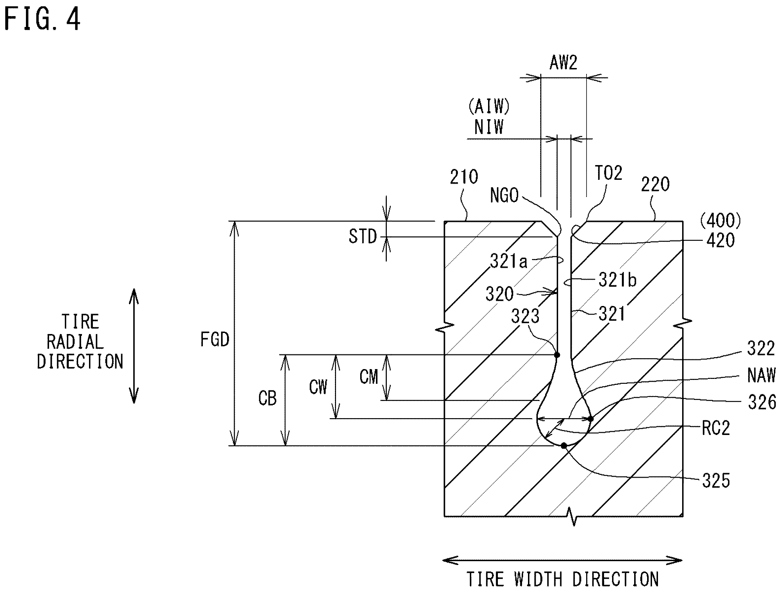

FIG. 4 is a schematic view for explaining a configuration of the circumferential narrow groove 320. The circumferential narrow groove 320 includes the enlarged width portion 322 on the inner side in the tire radial direction, the narrow groove portion 321 on the outer side in the tire radial direction of the enlarged width portion 322, and the second tapered portion 420 on the outer side in the tire radial direction of the narrow groove portion 321. The narrow groove portion 321 and the enlarged width portion 322 are connected at the connection position 323. The bottom portion 325 of the circumferential narrow groove 320 is also the bottom portion of the enlarged width portion 322. A maximum width position 326 of the enlarged width portion 322 is also the maximum width position of the circumferential narrow groove 320.

CB illustrated in FIG. 4 indicates the length from the connection position 323 to the bottom portion 325 in the tire radial direction. CW indicates the length from the connection position 323 to the maximum width position 326 in the tire radial direction. CM indicates the length from the connection position 323 to the midpoint of the length CB in the tire radial direction. The wall surface of the enlarged width portion 322 within the region of the length CM is formed in a curved surface shape drawn by a single arc. As a result, chipping or uneven wear of the edge portion of the enlarged width portion 322 in the late stage of wear is suppressed. NIW indicates the groove width of the narrow groove portion 321. NAW indicates the maximum width of the enlarged width portion 322 at the maximum width position 326. AIW indicates the width of an opening NGO of the narrow groove portion 321. AW2 indicates the width of an opening TO2 of the second tapered portion 420 (hereinafter, it may be referred to as a "second opening width AW2"). STD indicates the depth of the second tapered portion 420. In the tire 1, the depth STD is set to be substantially equal to the depth FTD of the first tapered portion 410.

As illustrated in FIG. 4, the second tapered portion 420 is configured to gradually expand from the opening width AIW of the opening NGO toward the second opening width AW2 of the opening TO2. Therefore, the angle of the second tapered portion 420 is more obtuse than the angle of the narrow groove portion 321 with respect to the tread surface TRS. As a result, in the circumferential narrow groove 320, chipping or uneven wear of the edge portion in the initial stage of wear is suppressed. Furthermore, the wet performance in the initial stage of wear is improved by the second tapered portion 420. In the tire 1, the second opening width AW2 of the second tapered portion 420 is set to be equal to or less than the maximum width NAW of the enlarged width portion 322.

The narrow groove portion 321 has the groove width NIW that is substantially uniform from the opening NGO to the connection position 323. That is, in the circumferential narrow groove 320, the opening width AIW of the opening NGO and the groove width NIW of the narrow groove portion 321 are set to be substantially equal to each other. The groove width NIW is set to the width at which, when the tire 1 comes into contact with the road surface, a side wall 321a and a side wall 321b of the narrow groove portion 321 come into contact with each other. The side wall 321a is also the side wall of the first land portion 210. The side wall 321b is also the side wall of the second land portion 220. That is, the tire 1 is configured such that, when it comes into contact with the road surface, the first land portion 210 and the second land portion 220 can support each other. As a result, in the tire 1, the stiffness of the tread 10 in the early stage of wear is improved. Therefore, in the tire 1, rolling resistance performance and wear resistance performance are improved. The circumferential main groove 330 is configured to have a width at which, when the tire 1 comes into contact with the road surface, the side walls of the circumferential main groove 330 do not come into contact with each other. The groove width NIW is 1.0 mm or more and 3.0 mm or less, and preferably 1.5 mm or more and 2.5 mm or less. As a result, the rolling resistance performance and the wear resistance performance of the tire 1 in the early stage of wear are maintained. A groove having a groove width of less than 1.0 mm is a sipe, and is distinguished from the narrow groove.

As described above, the narrow groove portion 321 of the tire 1 has the groove width NIW that is substantially uniform. Therefore, in the tire 1, a position, where the width on the outer side in the tire radial direction of the enlarged width portion 322 from the maximum width NAW thereof is equal to the groove width NIW, becomes the connection position 323. When the groove width NIW of the narrow groove portion 321 is not uniform, a position, where the width on the outer side in the tire radial direction of the enlarged width portion 322 from the maximum width NAW thereof is 3.0 mm or less, becomes the connection position 323.

The maximum width NAW is three times or more of the groove width NIW, and preferably four times or more. When the maximum width NAW is 3 times or more of the groove width NIW, an increase in the stiffness of the tread 10 in the late stage of wear is suppressed. Therefore, the grip performance in the late stage of wear is improved. In addition, the drainage property in the late stage of wear is secured, and the wet performance is improved. When the maximum width NAW is four times or more of the groove width NIW, excellent grip performance and wet performance are exhibited in the late stage of wear. The maximum width NAW is seven times or less of the groove width NIW, and preferably six times or less. When the maximum width NAW is seven times or less of the groove width NIW, the stiffness of the tread 10 in the early stage of wear is secured, and the rolling resistance performance and the wear resistance performance are maintained. When the maximum width NAW is six times or less of the groove width NIW, excellent rolling resistance performance and wear resistance performance are exhibited in the early stage of wear. The maximum width NAW is preferably 7.0 mm or less.

RC2 illustrated in FIG. 4 indicates the radius of curvature (hereinafter, it may be referred to as a "second radius of curvature RC2") of the bottom surface of the enlarged width portion 322. The second radius of curvature RC2 is preferably 1.5 mm or more and 3.5 mm or less. When the second radius of curvature RC2 is 1.5 mm or more, distortion of the bottom portion 325 during the driving of the tire 1 is reduced, and crack resistance performance is improved. When the second radius of curvature RC2 is 3.5 mm or less, the stiffness of the tread 10 is secured, and the wear resistance performance is improved.

[Relationship between Depth of Pinhole and Connection Position and Maximum Width Position of Circumferential Narrow Groove, and Operation and Effect]

The depth PHD of the pinhole 100 is set to be deeper than at the connection position 323 between the narrow width portion 321 and the enlarged width portion 322 of the circumferential narrow groove 320 in the tire radial direction. The depth PHD of the pinhole 100 is set to be shallower than the maximum width position 326 at which the enlarged width portion 322 of the circumferential narrow groove 320 has a maximum width in the tire radial direction. That is, the depth PHD of the pinhole 100 is set to be a depth within the region of the length CW from the connection position 323 to the maximum width position 326 in the tire radial direction. In the tire 1, the depth PHD is set to be the depth at the position of the length CM, which is the midpoint of the length CB, on the inner side in the tire radial direction.

In the early stage of wear, the side wall 321a and the side wall 321b of the narrow groove portion 321 of the circumferential narrow groove 320 are closed. Therefore, in the early stage of wear, the drainage function of the circumferential narrow groove 320 decreases. On the other hand, in the early stage of wear, the drainage function of the pinhole 100 is high. In the late stage of wear, the enlarged width portion 322 of the circumferential narrow groove 320 appears on the tread surface TRS. Therefore, in the late stage of wear, the drainage function of the circumferential narrow groove 320 is enhanced. On the other hand, in the late stage of wear, the volume of the pinhole 100 decreases and the drainage function decreases. As a result, the wet performance of the tire 1 is secured in a well-balanced manner from the early stage of wear to the late stage of wear.

[Modification]

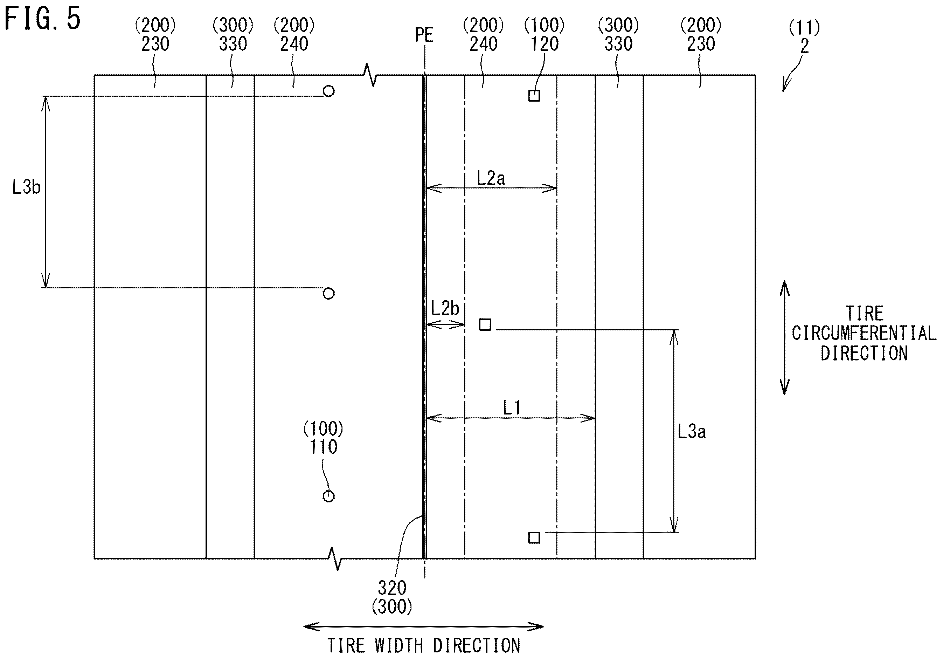

FIG. 5 is a schematic view of a tread pattern of a tire 2 according to a modification. Three circumferential grooves 300 are engraved in a tread 11 of the tire 2. The tire 2 has four land portions 200 defined by the three circumferential grooves 300. The tread 11 has one circumferential narrow groove 320 at the equator PE and a pair of shoulder circumferential main grooves 330 as the circumferential grooves 300. The tread 11 has a pair of fourth land portions 240 and a pair of shoulder land portions 230 as the land portions 200. The tire of the present invention only needs to have at least one circumferential narrow groove 320 located on the inner side in the tire width direction relative to the pair of circumferential main grooves 330. More specifically, the tire of the present invention can have a five-rib pattern having the pair of circumferential narrow grooves 320 shown in the tire 1, or can have a four-rib pattern having the one circumferential narrow groove 320 shown in the tire 2.

In the tire 1, the pinhole 100 having the tapered hole portion 110 and the first tapered portion 410 is shown, but the present invention is not limited thereto. For example, the tapered hole portion 110 without the first tapered portion 410 can also be applied as the pinhole 100. In addition, a quadrangular pyramidal hole portion 120 (hereinafter, it may be referred to as a "square hole portion 120") tapering toward the inner side in the tire radial direction can also be applied. From the viewpoint of suppressing occurrence of drilling, chipping, or uneven wear, the pinhole 100 preferably has the tapered hole portion 110.

L2a illustrated in FIG. 5 indicates a distance of $0.7 \times L1$ from the circumferential narrow groove 320. L2b indicates a distance of $0.3 \times L1$ from the circumferential narrow groove 320. In the tire 1, the pinholes 100 are provided at positions aligned in a straight line in the tire circumferential direction, but the present invention is not limited thereto. The pinholes 100 may be provided at positions where L2/L1 is 0.3 or more and 0.7 or less, preferably 0.4 or more and 0.6 or less, and particularly preferably 0.45 or more and 0.55 or less. In the tire 2, the square hole portions 120 provided in a staggered pattern are shown in the region between L2a and L2b. As a result, the rolling resistance performance and the wear resistance performance of the tire 2 are maintained, and chipping or uneven wear of an edge portion, existing at the boundary with the circumferential groove 300, of the fourth land portion 240 is suppressed.

L3a illustrated in FIG. 5 indicates a distance in the tire circumferential direction between pinholes 100 formed of two square hole portions 120, adjacent to each other in the tire circumferential direction, of the same fourth land portion 240. L3b indicates a distance in the tire circumferential direction between pinholes 100 formed of two tapered hole portions 110, adjacent to each other in the tire circumferential direction, of the same fourth land portion 240. In the tire 1, the pinholes 100 provided in each of the pair of second land portions 220 are provided at positions, each having the same distance L3 and aligned in a straight line in the tire width direction, but the present invention is not limited thereto. The relationship between the distance L3 between the pinholes 100 in the tire circumferential direction and the tire circumferential length L4 only needs to satisfy the above Formula (3). In the tire 2, the distance L3a and the distance L3b are different distances, and the square hole portion 120 and the tapered hole portion 110 are provided at positions not aligned in a straight line in the tire width direction. On the other hand, also in the tire 2, both L3a/L4 and L3b/L4 are 0.003 or more and 0.03 or less. As a result, the resistance performance and the wear resistance performance of the tire 2 are maintained and heat dissipation property is improved.

As long as the above Formula (3) is satisfied, the distances L3 in the same land portion 200 can be set to be different from each other. That is, in the same land portion 200, when a predetermined pinhole 100 is set as a reference (hereinafter, it may be referred to as a "reference pinhole"), pinholes 100 adjacent to the reference pinhole in the tire circumferential direction include a pinhole 100 adjacent to the reference pinhole on one direction side in the tire circumferential direction (hereinafter, it may be referred to as a "first adjacent pinhole") and a pinhole 100 adjacent to the reference pinhole on the other direction side (hereinafter, it may be referred to as a "second adjacent pinhole"). As long as the above Formula (3) is satisfied here, a distance L3 between the reference pinhole and the first adjacent pinhole can be set to be different from a distance L3 between the reference pinhole and the second adjacent pinhole. From the viewpoint of the grip performance of the tire, the distances L3 in the same land portion 200 are preferably equal to each other.

[Other Modifications]

The tire 1 is a heavy-duty tire, but the present invention is not limited thereto. For example, the present invention can be applied to a passenger car tire.

The groove width of the narrow groove portion 321 can be set to change within the range of 1.5 to 3.0 mm. For example, the narrow groove portion of the tire of the present invention may be configured such that the groove width of the opening portion is set to 1.5 mm, the groove width of the connection portion is set to 3.0 mm, and the groove width gradually increases.

## INDUSTRIAL APPLICABILITY

The technique described above, which can improve the wet performance and the heat dissipation property from the early stage of wear to the late stage of wear while maintaining the rolling resistance performance and the wear resistance performance, can be applied to various tires.

## REFERENCE SIGNS LIST

| | |
|---|---|
| 1, 2 | tire |
| 10, 11 | tread |
| 100 | pinhole |
| 110 | tapered hole portion |
| 111 | inclined portion |
| 112 | bottom portion of pinhole |
| 120 | square hole |
| 200 | land portion |
| 210 | first land portion |
| 220 | second land portion |
| 240 | third land portion |
| 230 | shoulder land portion |
| 300 | circumferential groove |
| 320 | circumferential narrow groove |

| | |
|---|---|
| 321 | narrow groove portion |
| 321a | side wall of narrow groove portion |
| 321b | side wall of narrow groove portion |
| 322 | enlarged width portion |
| 323 | connection position |
| 325 | bottom portion of enlarged width portion |
| 326 | maximum width position |
| 330 | shoulder circumferential main groove |
| 331 | tapered groove portion |
| 400 | tapered portion |
| 410 | first tapered portion |
| 420 | second tapered portion |
| 430 | third tapered portion |
| PE | equator |
| EL | equatorial plane |
| TRS | tread surface |
| L1 | width of land portion having pinhole |
| L2 | distance from narrow groove to pinhole |
| L2b | maximum distance |
| L2a | minimum distance |
| L3 | distance between pinholes |
| NGO | opening of narrow groove portion |
| PHO | opening of pinhole |
| TO1 | opening of first tapered portion |
| TO2 | opening of second tapered portion |
| FTD | depth of second tapered portion |
| STD | depth of second tapered portion |
| PHD | pinhole depth |
| FGD | depth of narrow groove |
| CMD | depth of main groove |
| AW1 | first opening width |
| AW2 | second opening width |
| POW | diameter of opening of pinhole |
| PBW | diameter of bottom portion of pinhole |
| NIW | groove width of narrow groove portion |
| AIW | opening width of narrow groove portion |
| NAW | maximum width of enlarged width portion |
| RC1 | first radius of curvature |
| RC2 | second radius of curvature |

**Claims**

1. A tire comprising a tread having a tread surface that comes into contact with a road surface, wherein:

   the tread has a plurality of circumferential grooves continuously extending in a tire circumferential direction;
   the plurality of circumferential grooves divide the tread into a plurality of land portions aligned in a tire width direction;
   the plurality of circumferential grooves has
   a pair of circumferential main grooves, and
   at least one circumferential narrow groove located on an inner side in the tire width direction relative to the pair of circumferential main grooves;
   the circumferential narrow groove includes
   a narrow width portion located on an outer side in a tire radial direction, and
   an enlarged width portion located on an inner side in the tire radial direction and having a groove width wider than the narrow width portion;
   a groove width NIW of the narrow width portion has a width at which, when the tire comes into contact with the road surface, side walls of the narrow width portion come into contact with each other;
   at least one of the land portions, which is adjacent to the circumferential narrow groove, has a plurality of pinholes aligned in the tire circumferential direction;
a depth of the pinhole is shallower than a depth of the circumferential main groove;
the pinhole has a shape tapering toward the inner side in the tire radial direction; and
a relationship between a width L1 of the land portion having the pinhole and a distance L2 from the circumferential narrow groove to the pinhole satisfies the following Formula (1):

$$0.3 \leq L2/L1 \leq 0.7 \qquad \text{Formula (1).}$$

2. The tire according to claim 1, wherein
the depth of the pinhole is set in the tire radial direction:

to be deeper than at a connection position between the narrow width portion and the enlarged width portion of the circumferential narrow groove; and
to be shallower than at a maximum width position where the enlarged width portion of the circumferential narrow groove has a maximum width.

3. The tire according to claim 1 or 2, wherein the pinhole has a first tapered portion opened to the tread surface.

4. The tire according to any one of claims 1 to 3, wherein:

the pinhole has a tapered hole portion; and
in the tapered hole portion,
a diameter of a bottom portion is 1.0 mm or more and 2.0 mm or less, and
a diameter of the opening in the tread surface is 2.0 mm or more and 4.0 mm or less.

5. The tire according to any one of claims 1 to 4, wherein a relationship between the width L1 and a distance L3 in the tire circumferential direction between two of the pinholes adjacent to each other in the tire circumferential direction of the same land portion satisfies the following Formula (2):

$$L1 < L3 \qquad \text{Formula (2).}$$

6. The tire according to any one of claims 1 to 5, wherein a relationship between the distance L3 in the tire circumferential direction between the two pinholes adjacent to each other in the tire circumferential direction of the same land portion and a tire circumferential length L4 satisfies the following Formula (3):

$$0.003 \leq L3/L4 \leq 0.03 \qquad \text{Formula (3).}$$

7. The tire according to any one of claims 1 to 6, wherein the circumferential narrow groove has a second tapered portion opened to the tread surface.

8. The tire according to any one of claims 1 to 7, wherein the Formula (1) is $0.4 \leq L2/L1 \leq 0.6$.

9. The tire according to claim 8, wherein the Formula (1) is $0.45 \leq L2/L1 \leq 0.55$.

10. The tire according to claim 6, wherein the Formula (3) is $0.005 \leq L3/L4 \leq 0.015$.

11. The tire according to claim 4, wherein

the bottom portion of the tapered hole portion includes an R surface, and
the R surface has a radius of curvature of 0.5 mm or more and 1.0 mm or less.

12. The tire according to any one of claims 1 to 11, wherein the groove width NIW is 1.0 mm or more and 3.0 mm or less.

13. The tire according to claim 12, wherein the groove width NIW is 1.5 mm or more and 2.5 mm or less.

FIG. 1

TIRE CIRCUMFERENTIAL DIRECTION

TIRE WIDTH DIRECTION

(10) 1

(200) 230
(200) 220
(200) 210
(200) 220
(200) 230

330 (300)
320 (300)

PE

100
L3
L1
L2
X

12

FIG. 2

EP 4 778 739 A1

# FIG.3

FIG. 4

# FIG. 5

TIRE CIRCUMFERENTIAL DIRECTION

TIRE WIDTH DIRECTION

EP 4 778 739 A1

Europäisches
Patentamt
European
Patent Office
Office européen
des brevets

# EUROPEAN SEARCH REPORT

**Application Number**

EP 25 22 5569

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 458 588 A1 (SUMITOMO RUBBER IND [JP]) 6 November 2024 (2024-11-06) * figures 1-5 * | 1-13 | INV. B60C1/00 B60C11/03 B60C11/04 B60C11/12 B60C11/13 |
| A | WO 2017/218002 A1 (MICHELIN & CIE [FR]; VAUTARD FREDERIC [US] ET AL.) 21 December 2017 (2017-12-21) * paragraph [0148]; figures 9,10 * | 1-13 | |
| A | DE 18 17 234 A1 (DUNLOP CO LTD) 10 July 1969 (1969-07-10) * figures 2,3 * | 1-13 | |
| A | US 2023/311588 A1 (TSUJIBAYASHI SATOKO [JP]) 5 October 2023 (2023-10-05) * paragraphs [0003], [0004], [0148]; figure 3 * | 1 | |
| A | FR 691 659 A (MICHELIN & CIE) 24 October 1930 (1930-10-24) * figure 1 * | 1 | |
| | | | **TECHNICAL FIELDS SEARCHED (IPC)** |
| A | JP 2012 056478 A (YOKOHAMA RUBBER CO LTD) 22 March 2012 (2012-03-22) * paragraphs [0077], [0078]; figures 1,7 * | 1 | B60C |
| A | GB 546 975 A (DUNLOP RUBBER CO; FRANK GEORGE WILLIAM KING ET AL.) 7 August 1942 (1942-08-07) * page 1, line 98; figures 1-13 * | 1 | |
| A | DE 16 05 644 A1 (DUNLOP RUBBER CO) 11 March 1971 (1971-03-11) * page 5, paragraph 3rd paragraph; figures 1,2 * * page 6, paragraph 3rd paragraph * | 1 | |

The present search report has been drawn up for all claims

| Place of search | Date of completion of the search | Examiner |
|---|---|---|
| Munich | 1 June 2026 | Brito, Fernando |

EPO FORM 1503 03.82 (P04C01)

## ANNEX TO THE EUROPEAN SEARCH REPORT
## ON EUROPEAN PATENT APPLICATION NO.

EP 25 22 5569

This annex lists the patent family members relating to the patent documents cited in the above-mentioned European search report.
The members are as contained in the European Patent Office EDP file on
The European Patent Office is in no way liable for these particulars which are merely given for the purpose of information.

01-06-2026

| Patent document cited in search report | | Publication date | Patent family member(s) | | Publication date |
|---|---|---|---|---|---|
| EP 4458588 | A1 | 06-11-2024 | EP | 4458588 A1 | 06-11-2024 |
| | | | JP | 2024160587 A | 14-11-2024 |
| WO 2017218002 | A1 | 21-12-2017 | EP | 3471970 A1 | 24-04-2019 |
| | | | US | 2019248189 A1 | 15-08-2019 |
| | | | WO | 2017218002 A1 | 21-12-2017 |
| | | | WO | 2017218733 A1 | 21-12-2017 |
| DE 1817234 | A1 | 10-07-1969 | DE | 1817234 A1 | 10-07-1969 |
| | | | FR | 96371 E | 16-06-1972 |
| | | | GB | 1250757 A | 20-10-1971 |
| | | | IE | 33152 B1 | 03-04-1974 |
| | | | MY | 7300174 A | 31-12-1973 |
| | | | SE | 358347 B | 30-07-1973 |
| | | | US | 3637001 A | 25-01-1972 |
| US 2023311588 | A1 | 05-10-2023 | JP | 2023148813 A | 13-10-2023 |
| | | | US | 2023311588 A1 | 05-10-2023 |
| FR 691659 | A | 24-10-1930 | NONE | | |
| JP 2012056478 | A | 22-03-2012 | JP | 5685868 B2 | 18-03-2015 |
| | | | JP | 2012056478 A | 22-03-2012 |
| GB 546975 | A | 07-08-1942 | NONE | | |
| DE 1605644 | A1 | 11-03-1971 | DE | 1605644 A1 | 11-03-1971 |
| | | | GB | 1132352 A | 30-10-1968 |
| | | | US | 3409064 A | 05-11-1968 |

EPO FORM P0459

For more details about this annex : see Official Journal of the European Patent Office, No. 12/82

**EP 4 778 739 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024118533 A
- JP 2012501914 A